# EUROPEAN PATENT APPLICATION

(11) **EP 2 511 909 A2**
(43) Date of publication of application: **17.10.2012**
(21) Application number: 12002540.8
(22) Date of filing: 10.04.2012
(51) Int. Cl.: G21C 3/04

(54) **Nuclear fuel pellet**

(30) Priority: 14.04.2011 US 201113086504
(71) Applicant: Westinghouse Electric Company LLC, Cranberry Township, Pennsylvania 16066 (US)
(72) Inventor: Aleshin, Yurly, Columbia South Carolina 29209 (US); Mitchell, David B., Columbia South Carolina 29229 (US)
(74) Representative: Gallo, Wolfgang

(57) **Abstract**

A nuclear fuel pellet design that is a cylindrical axial profile with either a larger radius or conical shaped ends such that the as built diameter at the ends of the pellet are slightly smaller than at the middle and at normal operating conditions, the diameter at the ends is nearly the same as at the middle. Preferably, there are short chamfers at the axial ends of the pellet.

## Description

### BACKGROUND OF THE INVENTION

### 1. Field

This invention pertains generally to nuclear fuel assemblies and more particularly to the fuel pellets employed within fuel elements in a nuclear fuel assembly.

### 2. Description of Related Art

The primary side of nuclear power generating systems which are cooled with water under pressure comprises a closed circuit which is isolated and in heat exchange relationship with a secondary circuit for the production of useful energy. The primary side comprises the reactor vessel enclosing a core internal structure that supports a plurality of fuel assemblies containing fissile material, the primary circuit within heat exchange steam generators, the inner volume of a pressurizer, pumps and pipes for circulating pressurized water; the pipes connecting each of the steam generators and pumps to the reactor vessel independently. Each of the parts of the primary side comprising a steam generator, a pump, and a system of pipes which are connected to the vessel form a loop of the primary side.

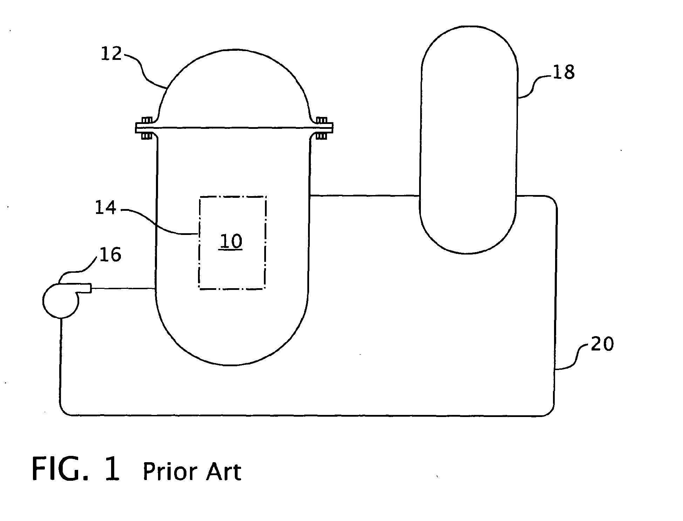

For the purpose of illustration, Figure 1 shows a simplified nuclear reactor primary system, including a generally cylindrical reactor pressure vessel 10 having a closure head 12 enclosing a nuclear core 14. The core 14 includes a plurality of elongated nuclear fuel assemblies each made up of a number of radioactive nuclear fuel elements that house fissile material that heats a liquid reactor coolant, such as water. The liquid reactor coolant is pumped into the vessel 10 by pumps 16, through the core 14 where the heat is absorbed and is discharged to a heat exchanger 18, typically referred to as a steam generator, in which the heat is transferred to a utilization circuit (not shown), such as a steam driven turbine generator. The reactor coolant is then returned to the pump 16, completing the primary loop. Typically, a plurality of the above described loops are connected to a single reactor vessel 10 by reactor coolant piping 20.

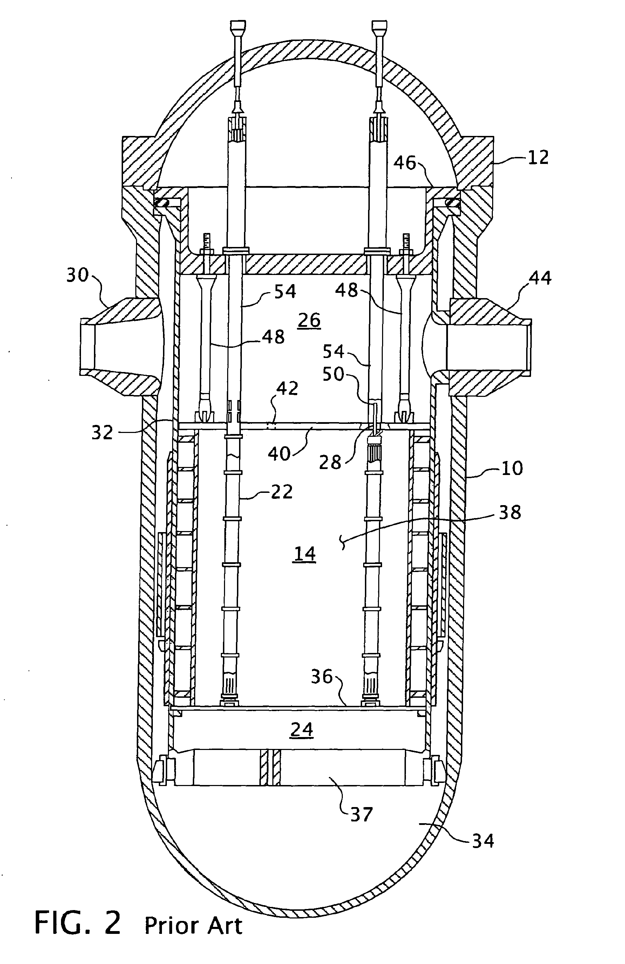

An exemplary reactor design is shown in more detail in Figure 2. In addition to the core 14, comprised of the plurality of vertical, co-extending fuel assemblies 22, for purpose of this description, the other vessel internal structures can be divided into lower internals 24 and upper internals 26. In conventional designs, the lower internals' function is to support, align and guide core components and instrumentation as well as direct flow within the vessel. The upper internals restrain or provide a secondary restraint for the fuel assemblies 22 (only two of which are shown for simplicity in Figure 2), and support and guide instrumentation and components, such as control rods 28. In the exemplary reactor shown in Figure 2, coolant enters the reactor vessel 10 through one or more inlet nozzles 30, flows down through an annulus between the vessel and the core barrel 32, is turned 180° in a lower plenum 34, passes upward through a lower support plate 37 and a lower core plate 36 upon which the fuel assemblies are seated and through and about the assemblies. In some designs, the lower support plate 37 and the lower core plate 36 are replaced by a single structure, a lower core support plate having the same elevation as 37. The coolant flow through the core and surrounding area 38 is typically large resulting in a pressure drop and frictional forces that tend to cause the fuel assemblies to rise, which movement is restrained by the upper internals, including a circular upper core plate 40. Coolant exiting the core 14 flows along the underside of the upper core plate 40 and upwardly through a plurality of perforations 42. The coolant then flows upwardly and radially outward to one or more outlet nozzles 44.

The upper internals 26 can be supported from the vessel or the vessel head and include an upper support assembly 46. Loads are transmitted between the upper support assembly 46 and the upper core plate 40, primarily by a plurality of support columns 48. The support columns 48 are respectively aligned above selected fuel assemblies 22 and perforations 42 in the upper core plate 40.

Rectilinearly moveable control rods 28, which typically include a drive shaft 50 and spider assembly 52 of neutron poison rods, are guided through the upper internals 26 and into aligned fuel assemblies 22 by control rod guide tubes 54. The guide tubes are fixedly joined through the upper support assembly 46 and the top of the core plate 40. The support column 48 arrangement assists in retarding guide tube defamation under accident conditions which could detrimentally affect control rod insertion capability.

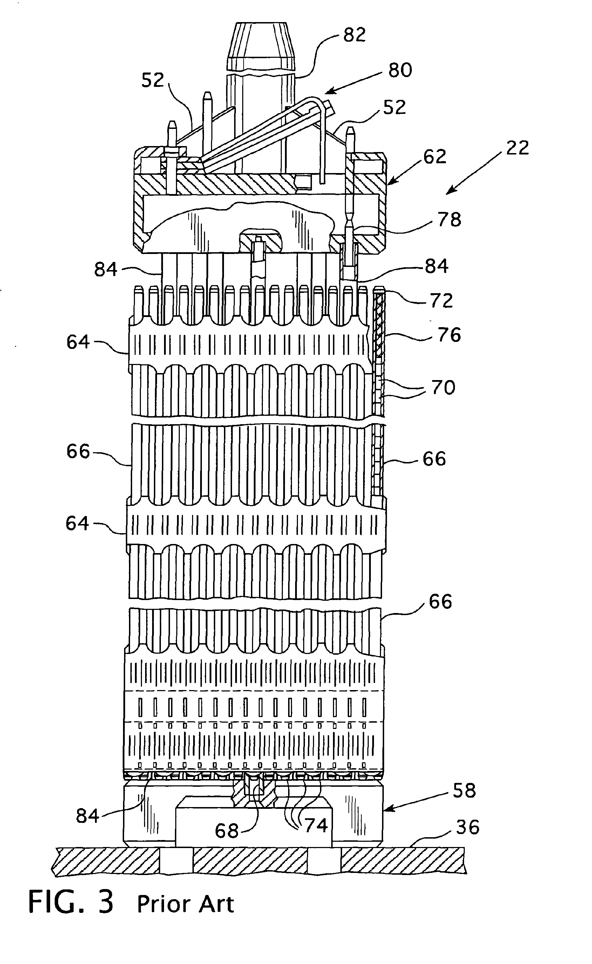

Figure 3 is an elevational view, represented in vertically shortened form, of a fuel assembly being generally designated by reference character 22. The fuel assembly 22 is the type used in a pressurized water reactor and has a structural skeleton, which at its lower end includes a bottom nozzle 58. The bottom nozzle 58 supports the fuel assembly 22 on the lower core plate 36 in the core region of the nuclear reactor. In addition to the bottom nozzle 58, the structural skeleton of the fuel assembly 22 also includes a top nozzle 62 at its upper end and a number of guide tubes or thimbles 84 which align with the guide tubes 54 in the upper internals. The guide tubes or thimbles 84 extend longitudinally between the bottom and top nozzles 58 and 62 and at opposite ends are rigidly attached thereto.

The fuel assembly 22 further includes a plurality of transverse grids 64 axially spaced along and mounted to the guide thimbles 84 and an organized array of elongated fuel rods 66 transversely spaced and supported by the grids 64. The fuel assembly 22, as shown in Figure 3, also has an instrumentation tube 68 located in the center thereof that extends between and is captured by the bottom and top nozzles 58 and 62. With such an arrangement of parts, fuel assembly 22 forms an integral unit capable of being conveniently handled without damaging the assembly of parts.

As mentioned above, the fuel rods 66, in the array thereof in the assembly 22, are held in spaced relationship with one another by the grids 64 spaced along the fuel assembly length. Each fuel rod 66 includes a plurality of nuclear fuel pellets 70 and is closed at its opposite ends by upper and lower end plugs 72 and 74. The pellets 70 are maintained in a stack by a plenum spring 76 disposed between the upper end plug 72 and the top of the pellet stack. The pellets 70, composed of fissile material, are responsible for creating the reactive power of the reactor. The cladding which surrounds the pellets functions as a barrier to prevent the fission byproducts from entering the coolant and further contaminating the reactor system.

To control the fission process, a number of control rods 78 are reciprocally moveable in the guide thimbles 84 located at predetermined positions in the fuel assembly 22. Specifically, a rod cluster control mechanism 80 positioned above the fuel assembly top nozzle 62, supports a plurality of control rods 78. The control mechanism has an internally threaded cylindrical hub member 82 with a plurality of radially extending flukes or arms 52 that form the spider previously noted with regard to Figure 2. Each arm 52 is interconnected to a control rod 78 such that the control mechanism 80 is operable to move the control rods vertically in the guide thimbles 84 to thereby control the fission process in the fuel assembly 22 under the motive power of a control rod drive shaft 50 which is coupled to the control rod hub 80, all in a well known manner.

The typical fuel rod 66 used in commercial nuclear reactors measures approximately 8 to 14 feet (2.4 to 4.3 meters) in length and contains multiple fuel pellets, each being about 0.3 to 0.6 inch (0.7 to 1.5 cm) long by 0.3 to 0.4 inch (0.7 to 1.0 cm) in diameter. During reactor operation, the fuel pellets are irradiated and produce fission products which cause the pellets to swell. In some cases, such swelling can place strains sufficiently great on the fuel rod walls to cause the fuel rod to fracture or fail and release radioactive particles to the reactor coolant. The force of the fuel pellets on the cladding is generally referred to as pellet cladding mechanical interaction. Tensile stresses from pellet cladding mechanical interaction and the caustic compounds which are the byproducts of irradiating the pellets contain fission products such as I₂ and ZrI₄ which are responsible for initiating inside diameter cracks in the cladding which may propagate through the cladding wall potentially breaching the cladding barrier. This is referred to as Pellet Cladding Interaction / Stress Corrosion Cracking (PCI/SCC). Various means have been tried to reduce the effect of pellet cladding interaction, such as reducing the axial length of the pellets, varying the density of the pellets, and providing a central void in the pellets. However, there is room for further improvement.

Accordingly, an improved pellet design is desired that will further reduce the effects of pellet clad interaction to prevent a breach of the cladding walls.

In addition, such an improved pellet design is desired that will not materially reduce the reactive power of the pellets.

### SUMMARY

These and other objects are achieved by a substantially round fuel pellet design having a bottom surface, a top surface and an axial dimension that extends between the bottom and top surfaces. In accordance with this embodiment, a diameter of the nuclear fuel pellet varies between the bottom surface and the top surface, along the axial dimension, so that the diameter at a midpoint along the axial dimension is greater than the diameter of at least one of the top surface and the bottom surface. Preferably, the diameter of the top surface and the bottom surface are less than the diameter at the midpoint and desirably at least one of the top surface and the bottom surface is chamfered around a periphery.

Preferably, the diameter at the at least one of the top surface and the bottom surface is sized so that it substantially equals the diameter at the axial midpoint during normal reactor operating temperatures. Desirably, the diameter along the axial length of the pellet varies substantially gradually between the midpoint and the at least one of the top surface and the bottom surface. Preferably, the diameter varies substantially linearly to form a frustroconical shape between the axial midpoint and the at least one of the top surface and the bottom surface. Preferably, there is substantially no change over the standard volume of a traditional pellet.

### BRIEF DESCRIPTION OF THE DRAWINGS

A further understanding of the invention can be gained from the following description of the preferred embodiments when read in conjunction with the accompanying drawings in which:

Figure 1 is a simplified schematic of a nuclear reactor system to which this invention can be applied;

Figure 2 is an elevational view, partially in section, of a nuclear reactor vessel and internal components to which this invention can be applied;

Figure 3 is an elevational view, partially in section, of a fuel assembly illustrated in vertically shortened form, with parts broken away for clarity;

Figure 4 is a graphical comparison of the HOOP stress distribution at a 100% power of a standard pellet, a half height pellet and a pellet constructed in accordance with the preferred embodiments;

Figure 5 is a graphical representation of the maximum HOOP stress experienced by each of the pellet designs illustrated in Figure 4 for the linear heat generation rates shown;

Figure 6 is an extended graphical representation of the curves illustrated in Figure 4 superimposed on each other; and

Figure 7 is a schematic representation of a pellet constructed in accordance with the preferred embodiment.

### DESCRIPTION OF THE PREFERRED EMBODIMENT

In accordance with this embodiment, a UO₂ fuel pellet design is provided where the cylindrical outer surface axial profile follows either a large radius or conical shaped ends such that, (a) the as built diameter at the ends of the pellets are slightly smaller than at the middle, and (b) at normal operating conditions the diameter at the ends is nearly the same as at the middle. Preferably, these axial profile variations are in addition to the short chamfers that are currently provided at the axial ends of a pellet. The obj ects of this embodiment are to (1) reduce the peak cladding strain/stress due to pellet clad mechanical interaction during power increases while (2) maintaining the cladding axial temperature distribution during normal operation. This reduces the peak cladding stress and thereby increases the margin to pellet clad mechanical interaction initiated cladding failure.

Applicants have determined that the reason for the high stresses at the pellet ends is that a cylindrical pellet forms an hourglass shape at higher temperatures. Therefore, once pellet cladding contact occurs and the pellet expands as power increases, the expansion is greater at the pellet ends. By using an axial profile with a smaller diameter at the ends, the hourglass effect is reduced so that the pellet shape approaches a cylinder as temperature increases. Therefore, the increase in peak strain/stress with increasing power is reduced. Desirably, the pellet profile must be balanced so that at normal operating conditions, the radial heat flux from the pellet to the cladding is nearly uniform, thus preventing hot spots and cool sinks.

The advantages of the design of this embodiment is that it provides improved pellet cladding interaction margin while maintaining the current pellet makeup, i.e., length/diameter ratios and volumes. The design of this embodiment requires only a slight change in the pellet dyes and finish grinding. The dimensional changes are relatively small for the improvement it provides. The maximum diameter increase at the axial center does not exceed approximately 0.005 inch (0.013 cm) and the maximum difference in diameter between the axial center and the ends before the chamfers does not exceed approximately 0.005 inch (0.013 cm). The preferable increase in the pellet diameter at the axial center is around 0.001 inch (0.003 cm) and the preferable difference in diameter between the axial center and the ends before the chamfers is around 0.003 inch (0.008 cm). Preferably, the criteria for this embodiment provides:
- no reduction in pellet volume
- no significant change in pellet dish and chamfer geometry
- no significant deviation in fuel rod temperature distribution, (*i.e.,* no "cold"/"hot" spots)
- significant reduction in cladding maximum HOOP stresses during transient conditions
- uniform cladding HOOP stress distribution at selected power.
This is in contrast to other pellet clad interaction remedies such as short pellets and pellets in which additives have been incorporated or densities varied.

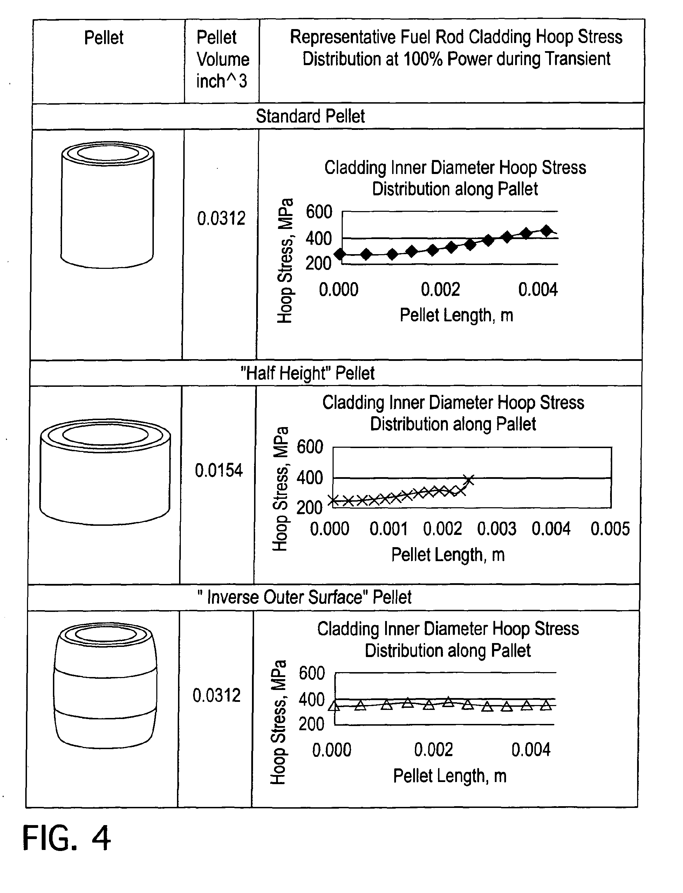

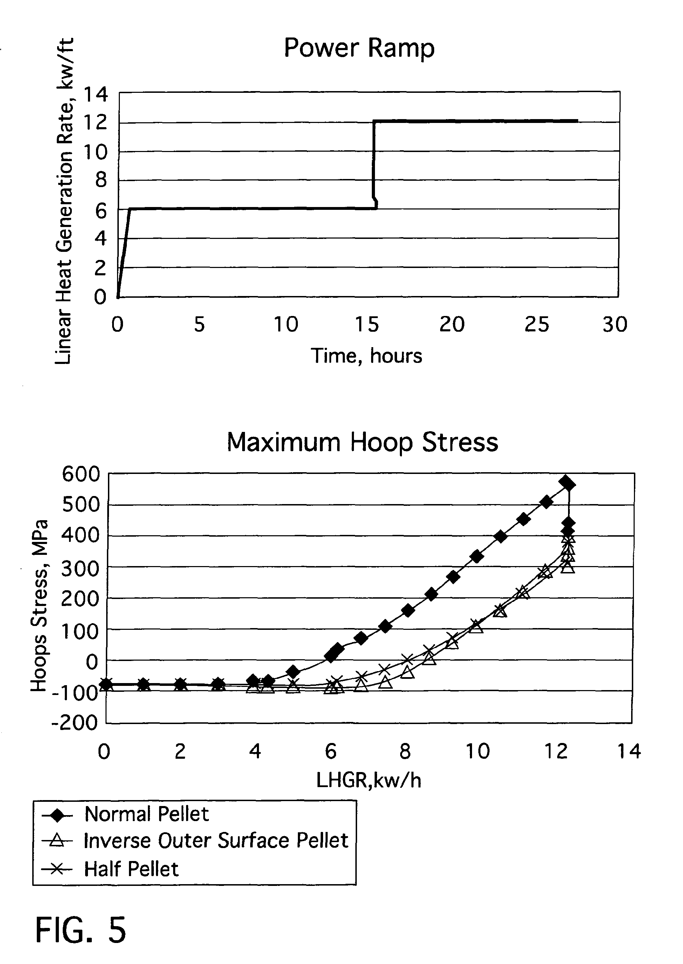

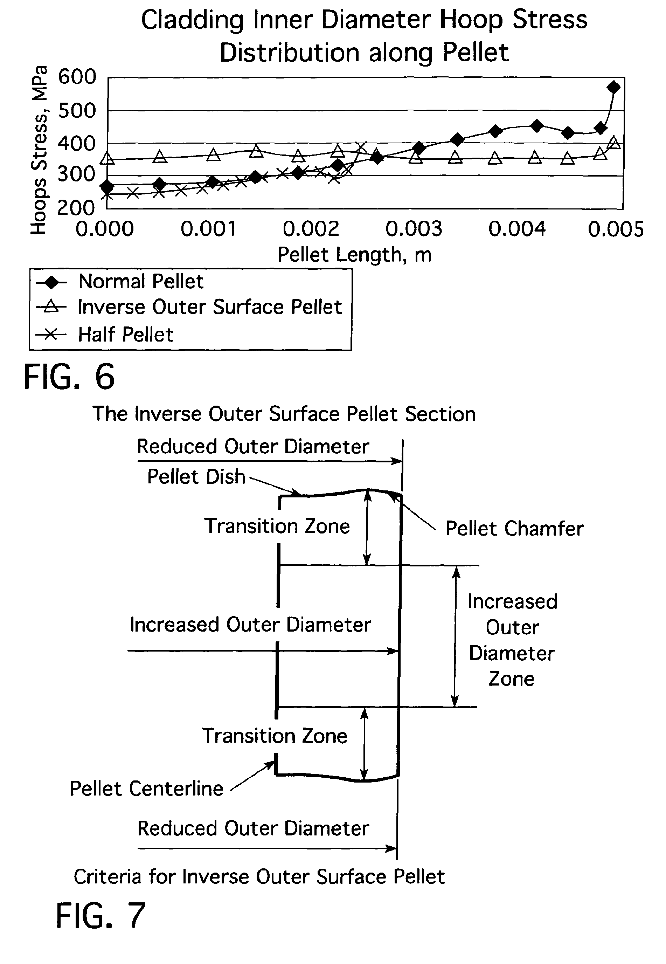

Figures 4, 5 and 6 provide a graphical illustration of a stress performance evaluation comparison that was developed using a finite element analysis software for a pellet designed in accordance with this embodiment in comparison to a short pellet with a length to diameter ratio of less than one and to a standard pellet. The change in diameter along the axial profile of the bottom fuel pellet shown in Figure 4 to represent the embodiment described herein is exaggerated for the purpose of illustration so the change in diameter can be readily observed. The graphs at the right of Figure 4 show a marked improvement in the cladding inner diameter HOOP stress distribution along the pellet axial length for a pellet designed in accordance with this embodiment. Figure 5 shows a marked improvement in the maximum HOOP stress for a pellet designed in accordance with this embodiment over a started pellet for a power ramp. Figure 6 shows an extension of the curves illustrated in Figure 4, superimposed upon each other for a direct comparison. Figure 7 is a schematic showing the axial dimensional requirements for this embodiment, though it should be appreciate that the change in diameter along the axial length can be gradual as shown in Figure 4 rather than the step change implied by the schematic shown in Figure 7.

While specific embodiments of the invention have been described in detail, it will be appreciated by those skilled in the art that various modifications and alternatives to those details could be developed in light of the overall teachings of the disclosure. Accordingly, the particular embodiments disclosed are meant to be illustrative only and not limiting as to the scope of the invention which is to be given the full breadth of the appended claims and any and all equivalents thereof.

## Claims

1. A substantially round nuclear fuel pellet comprising:
a bottom surface;
a top surface; and
an axial dimension extending between the bottom surface and the top surface, wherein a diameter of the nuclear fuel pellet varies between the bottom surface and the top surface along the axial dimension so that a diameter at a midpoint along the axial dimension is greater than a diameter of at least one of the top surface and the bottom surface.

2. The nuclear fuel pellet of Claim 1 wherein the diameter of the top surface and the bottom surface are less than the diameter at the midpoint.

3. The nuclear fuel pellet of Claim 1 wherein the at least one of the top surface and the bottom surface is chamfered around a periphery.

4. The nuclear fuel pellet of Claim 1 wherein the diameter at the at least one of the top surface and the bottom surface is sized so that it substantially equals the diameter at the midpoint during normal reactor operating temperatures.

5. The nuclear fuel pellet of Claim 1 wherein the diameter varies substantially gradually between the midpoint and the at least one of the top surface and the bottom surface.

6. The nuclear fuel pellet of Claim 5 wherein the diameter varies substantially linearly to form a substantially frustroconical shape between the midpoint and the at least one of the top surface and the bottom surface.

7. The nuclear fuel pellet of Claim 1 wherein there is substantially no change over a standard volume of a traditional fuel pellet.

8. A nuclear fuel element having a tandem array of nuclear fuel pellets enclosed in a cladding, at least some of the nuclear fuel pellets comprising fuel pellets of any of claims 1 to 7.

9. A nuclear fuel assembly comprising a spaced array of fuel elements having a tandem array of nuclear fuel pellets enclosed in a cladding, at least some of the nuclear fuel pellets comprising fuel pellets of any of claims 1 to 7.
